# EUROPEAN PATENT APPLICATION

(11) **EP 4 092 564 A1**
(43) Date of publication of application: **23.11.2022**
(21) Application number: 22151765.9
(22) Date of filing: 17.01.2022
(51) Int. Cl.: G06F 40/30, G06F 16/35, G06F 16/33, G06F 40/247, G06F 40/295

(54) **METHOD AND APPARATUS FOR CONSTRUCTING EVENT LIBRARY, ELECTRONIC DEVICE AND COMPUTER READABLE MEDIUM**

(30) Priority: 19.05.2021 CN 202110548521
(71) Applicant: BEIJING BAIDU NETCOM SCIENCE TECHNOLOGY CO., LTD., Beijing 100085 (CN)
(72) Inventor: XU, Siqi, Beijing, 100085 (CN); ZHONG, Huiqiang, Beijing, 100085 (CN); HUANG, Qiang, Beijing, 100085 (CN); ZHUO, Zecheng, Beijing, 100085 (CN); LIU, Chenhui, China, 100085 (CN); ZHOU, Houqian, Beijing, 100085 (CN)
(74) Representative: Gill Jennings & Every LLP

(57) **Abstract**

The present disclosure provides a method and apparatus for constructing an event library, which relate to the technical fields of deep learning, natural language processing, big data, and the like. An implementation includes: acquiring at least one event text data, the at least one event text data being to be assigned to a text library; obtaining an extraction event name based on the event text data; performing a match between the extraction event name and event information in the text library, to obtain a recalled event in the text library; detecting, based on the recalled event, whether the extraction event name meets a unifying condition; and in response to detecting that the extraction event name does not meet the unifying condition, obtaining a new event name in the event library based on the extraction event name, and adding the event text data as a new event into the text library.

## Description

### TECHNICAL FIELD

The present disclosure relates to the technical field of data processing, in particular, to the technical fields of deep learning, natural language processing, big data, and the like, and more particularly, to a method and apparatus for constructing an event library, an electronic device, a computer readable medium, and a computer program product.

### BACKGROUND

In the existing technologies, the method for assigning event names of news events to a library generally divides a news headline into multiple sentences, and then determines whether each sentence is an event name. When there is a subsentence being an event name, a match is performed between the event name and event names already existing in an event library. If a matching event name is not found in the event library, the event name found based on the subsentence is assigned to the event library. This method may separate an event name which is originally composed of two sentences, thereby causing news that should have been classified as events to be ignored, and the comprehensiveness of the events cannot be guaranteed. Moreover, if a match is performed between an incomplete event name found based on a subsentence and the event names in the event library, only one-sided events can be found, and there is no way to found matching complete event names.

### SUMMARY

A method and apparatus for constructing an event library, an electronic device, a computer readable medium, and a computer program product are provided.

According to a first aspect, a method for constructing an event library is provided, and the method includes: acquiring at least one event text data, the at least one event text data being to be assigned to a text library, the text library being preset; obtaining an extraction event name based on the event text data; performing a match between the extraction event name and event information in the text library, to obtain a recalled event in the text library; detecting, based on the recalled event, whether the extraction event name meets a unifying condition; and in response to detecting that the extraction event name does not meet the unifying condition, obtaining a new event name in the event library based on the extraction event name, and adding the event text data as a new event into the text library.

According to a second aspect, an apparatus for constructing an event library is provided, and the apparatus includes: an acquisition unit, configured to acquire at least one event text data, the at least one event text data being to be assigned to a text library, the text library being preset; an extraction unit, configured to obtain an extraction event name based on the event text data; a matching unit, configured to perform a match between the extraction event name and event information in the text library, to obtain a recalled event in the text library; a detection unit, configured to detect, based on the recalled event, whether the extraction event name meets a unifying condition; and an adding unit, configured to obtain, in response to detecting that the extraction event name does not meet the unifying condition, a new event name in the event library based on the extraction event name, and add the event text data as a new event into the text library.

According to a third aspect, an electronic device is provided, and the electronic device includes: at least one processor; and a memory communicatively connected to the at least one processor, where the memory stores instructions executable by the at least one processor, and the instructions, when executed by the at least one processor, cause the at least one processor to execute the method as described in any of the implementations of the first aspect.

According to a fourth aspect, a non-transitory computer readable storage medium storing computer instructions is provided, where the computer instructions are used to cause a computer to execute the method as described in any of the implementations of the first aspect.

According to a fifth aspect, a computer program product including a computer program is provided, where the computer program, when executed by a processor, implements the method as described in any of the implementations of the first aspect.

It should be appreciated that the contents described in this section are not intended to identify the key or critical features of embodiments of the disclosure, nor is it intended to limit the scope of the disclosure. The other features of the disclosure will become easy to understand through the following description.

### BRIEF DESCRIPTION OF THE DRAWINGS

The accompanying drawings are intended to provide a better understanding of the disclosure and do not constitute a limitation to the disclosure.
Fig. 1 is a flowchart of a method for constructing an event library according to an embodiment of the disclosure;
Fig. 2 is a flowchart of a method for constructing an event library according another embodiment of to the disclosure;
Fig. 3 is a flowchart of a method for obtaining a recall event according to an embodiment of the present disclosure;
Fig. 4 is a flowchart of a method for obtaining an extraction event name according to an embodiment of the present disclosure;
Fig. 5 is a schematic structural diagram of an apparatus for constructing an event library according to an embodiment of the disclosure; and
Fig. 6 is a block diagram of an electronic device adapted to implement the method for constructing an event library according to an embodiment of the disclosure.

### DETAILED DESCRIPTION OF EMBODIMENTS

Example embodiments of the disclosure are described below in combination with the accompanying drawings, where various details of embodiments of the disclosure are included to facilitate understanding and should be considered as examples only. Therefore, those of ordinary skill in the art should realize that various changes and modifications may be made to the embodiments described herein without departing from the scope and spirit of the disclosure. Similarly, for clarity and conciseness, descriptions of well-know functions and structures are omitted in the following description.

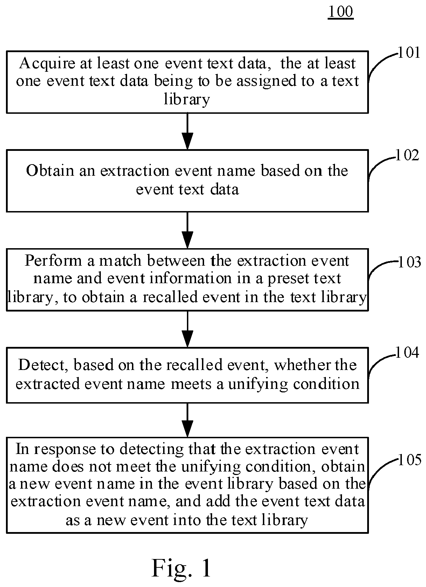

Fig. 1 shows a flow 100 of a method for constructing an event library according to an embodiment of the disclosure. The method for constructing an event library includes the following steps:
Step 101: acquiring at least one event text data, the at least one text data being to be assigned to a library.

In this embodiment, the event text data refers to text data of at least one type of event, and may have different representations based on different text contents. For example, the different text contents include: legendary story, event news, and/or the like. When the event text data is event news, the event text data includes a title, an abstract, an introduction, a subject, a background, a conclusion, and/or the like.

In this embodiment, an execution body on which the method for constructing an event library runs may acquire the event text data to be assigned to the library by various means, for example, acquire the event text data from a client terminal in real time, or acquire the pre-stored event text data from a database.

Step 102: obtaining an extraction event name based on the event text data.

In this embodiment, the extraction event name may be a phrase or a sentence that can summarize information in the entire text data and is obtained by extracting the core content of the event text data. The event text data may be summarized by the extraction event name. Further, during extracting the extraction event name, an event name extraction may be performed on the event text data based on a template, for example, the template is noun-verb-noun.

In this embodiment, two libraries are preset: a text library and an event library. The text library is used to store event text data and content related to the event text data. The content related to the event text data includes: event text ID, extraction event name, and an event. One piece of event text data has one event text ID, one piece of event text data corresponds to one extraction event name, one or more pieces of event text data corresponds to one event, and the event has a corresponding event name in the event library. It should be noted that the text library has a mapping relationship with the event library, and the text library is associated with the event library through event, where an event in the text library corresponds to an event name and an event name ID in the event library. Both the text library and the event library may employ ES (ElasticSearch, which is a distributed full-text retrieval framework) capable of providing retrieval services as a data storage.

The event library and text library is used to store different events and event contents related to the different events. The event contents related to the different events include: event IDs, extraction event names, and event names corresponding to the event IDs (an event name is unique to event ID), where one event has one event ID, one subject ID corresponds to one event name, and an event corresponds to one or more extraction event names.

In this embodiment, the text library stores events in text granularity, and records the text content of each event in detail. The event library stores events in event granularity, and records the event name of each event and one or more extraction event name extracted from the event text data corresponding to each event name in detail.

Alternatively, the text library and the event library may further include elements such as an event entity and a time. The event entity includes, for example, a person, a location, an organization, and/or the like. The extracted event entity is added to a corresponding event in the text library, and the number of event entity may be increased according to the requirements of the online services. The Elements such as the event entity and the time are used as relevant information of the events in the text library and event library, such as, the start and end times of the events and the event entities involved in the events. These elements may provide comprehensive assistance for subsequent event analysis based on the event library, so that a user can understand the events more clearly or perform a filtering retrieval on the events by using this information as a filtering condition during an event retrieval.

Step 103: performing a match between the extraction event name and event information in a text library, the text library being preset, to obtain a recalled event in the text library.

In this embodiment, the preset text library is the above-mentioned text library, and the text library is used to store a plurality pieces of event text data that are already assigned to the library, and each piece of event text data assigned to the library corresponds to one event text ID, one extraction event name, and one event. The event may be the same as the extraction event name or may be different from the extraction event name.

In this embodiment, the event information in the text library is relevant information of the plurality of event text data already assigned to the library and stored in the text library. The relevant information of the plurality of event text data may include an extraction event name of each event text data, an event (an event ID, an event name corresponding to an event ID, and/or the like) corresponding to each event text data. For example, the relevant information is the extraction event name of the event text data already assigned to the library, a match is performed between the event text data to be assigned to the library and the extraction event name of the event text data already assigned to the library in the text library, and if the match is successful, the event text data already assigned to the library corresponding to the matching extraction event name is a recalled event. There may be one or more recalled events.

Step 104: detecting, based on the recalled event, whether the extraction event name meets a unifying condition.

In this embodiment, the unifying condition is a condition for testing whether the extraction event name of the event text data to be assigned to the library and the extraction event name of the recalled event belong to the same event. The condition may be an index or a trained unifying discrimination model. When the extraction event name of the event text data to be assigned to the library and the extraction event name of the recalled event meet the index, then it is determined that the extraction event name of the event text data to be assigned to the library meets the unifying condition. Alternatively, when the extraction event name of the event text data to be assigned to the library and the extraction event name of the recalled event are both input to the unifying discrimination model, a confidence whether the extraction event name and the extraction event name of the recalled event may be classified as the same event is output, and when the confidence is greater than a preset threshold, it is determined that the extraction event name meets the unifying condition.

The unifying discrimination model employs a deep learning classification model, and a training sample is < an event name pair composed of two event names, label (0, 1) >. When the confidence is greater than a preset threshold, an event to which the recalled event news belongs may be used as an event to which the event text data to be assigned to the library belongs.

In some alternative implementations of this embodiment, the event library stores the event name of the recalled event and an extraction event name of the recalled event, and the detecting, based on the recalled event, whether the extraction event name meets the unifying condition, includes: acquiring the event name of the recalled event from the event library; inputting the event name of the recalled event and the extraction event name of the event text data to be assigned to the library into a unifying discrimination model to obtain a recall probability of that the extraction event name belongs to the event name of the recalled event; in response to the recall probability being greater than a recall threshold, inputting the extraction event name of the recalled event and the extraction event name of the event text data to be assigned to the library into the unifying discrimination model to obtain a unifying probability of that the extraction event name belongs to the event name of the recalled event; and in response to the unifying probability being greater than the recall threshold, determining that the extraction event name meets the unifying condition.

In these alternative implementations, the recall threshold is a configurable value, and the recall threshold may be specifically set based on the configuration requirements.

In these alternative implementations, by two times of the unifying discrimination with the event name of the recalled event and the extraction event name of the recalled event respectively, the reliability of the determination of the unifying condition of the extraction event name of the event text data to be assigned to the library is improved.

Step 105: in response to detecting that the extraction event name does not meet the unifying condition, obtaining a new event name in the event library based on the extraction event name, and adding the event text data as a new event to the text library.

In this embodiment, when the extraction event name of the event text data to be assigned to the library does not meet the unifying condition, it is determined that the extraction event name of the event text data to be assigned to the library may not be assigned to an existing event name, then a new event name needs to be formed in the event library. When the event text data to be assigned to the library is stored into the text library, a new event text ID needs to be formed in the text library, and the new event text ID corresponds to the new event name formed in the event library.

According to the method for constructing an event library provided by embodiments of the present disclosures, firstly, the at least one event text data to be assigned to the library is acquired; secondly, based on the acquired event text data, an extraction event name is obtained; then, match is performed between the extraction event name and the event information in the preset text library to obtain a recalled event in the text library; thereafter, based on the recalled event, whether the extraction event name meets the unifying condition is detected; and finally, in response to detecting that the extraction event name does not meet the unifying condition, a new event name is formed in the event library based on the extraction event name, and the event text data as a new event is added to the text library. Therefore, when the event name in the event library is constructed, the recall event is obtained from the text library and the unifying determination is performed, and the corresponding relationship between the extraction event name and the information in the text library is comprehensively considered, so that the comprehensiveness and accuracy of the construction of the event library are improved.

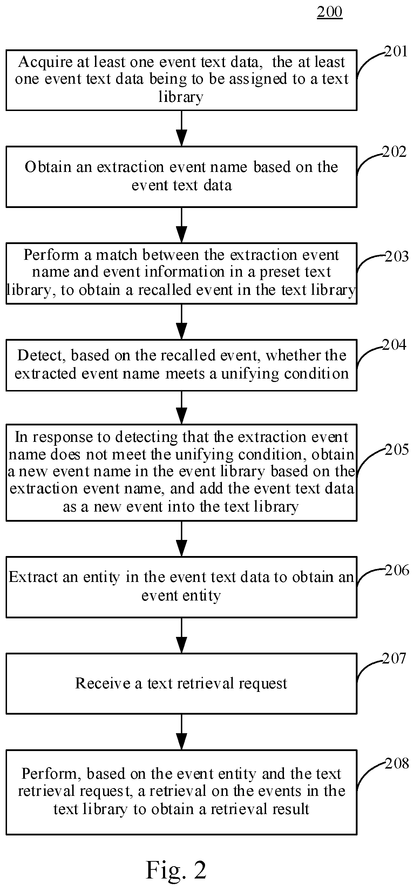

Fig. 2 shows a flow 200 of a method for constructing an event library according another embodiment of to the disclosure. The method for constructing an event library includes the following steps:
Step 201: acquiring at least one event text data to be assigned to a library.
Step 202: obtaining, based on the event text data, an extraction event name.
Step 203: performing a match between the extraction event name and event information in a preset text library to obtain a recalled event in the text library.
Step 204: detecting, based on the recalled event, whether the extraction event name meets a unifying condition; and if it is detected that the extraction event name does not meet the unifying condition, executing step 205.

In an alternative implementation of this embodiment, if it is detected that the extraction event name meets the unifying condition, the extraction event name is assigned to an event name corresponding to the recalled event in the event library, and the event text data is assigned to the recalled event in the text library.

In this alternative implementation, an event ID of an existing event and an event name corresponding to the event ID are stored for the event text data assigned to the existing event.

In this alternative implementation, when the extraction event name of the event text data to be assigned to the library meets the unifying condition, it may be determined that the extraction event name of the event text data to be assigned to the library may be assigned to an existing event name, i.e., to an existing event name in the event library (to the event name corresponding to the recalled event). When the event text data to be assigned to the library is stored into the text library, the text library gives the event text ID corresponding to the recalled event to the event text data to be assigned to the library, and the event text ID corresponds to the event name of the recalled event.

In this alternative implementation, when the extraction event name of the event text data to be assigned to the library meets the unifying condition, the extraction event name of the event text data to be assigned to the library is assigned to an existing event name in the event library, which improves the unifying effect of the extraction event name of the event text data to be assigned to the library, and ensures the effectiveness of the classification of the event library.

Step 205: in response to detecting that the extraction event name does not meet the unifying condition, obtaining a new event name in the event library based on the extraction event name, and adding the event text data as a new event to the text library.

It should be understood that the operations and features in steps 201 to 205 correspond to the operations and features in steps 101 to 105, respectively. Therefore, the description of the operations and features in steps 101 to 105 is also applicable to steps 201 205, and is not described in detail herein.

In this embodiment, there may be one or more pieces of event text data to be assigned to the library, and a subject of each text data to be assigned to the library corresponds to one extraction event name. When there is one event text data to be assigned to the library, the extraction event name of the event text data to be assigned to the library may be a new obtained event name in the event library. When there is a plurality pieces of event text data to be assigned to the library, the extraction event names of the plurality pieces of the event text data to be assigned to the library may be normalized, and finally a most appropriate new event name corresponding to the plurality piece of the event text data to be assigned to the library is obtained.

In some alternative implementations of this embodiment, when there are a plurality pieces of event text data, each piece of event text data corresponds to one extraction event name, and the obtaining the new event name in the event library based on the extraction event name includes: calculating a similarity between extraction event names corresponding to any two of the plurality of event text data; calculating, for two event text data whose similarity is greater than a similarity threshold, a unifying probability of extraction event names corresponding to the two event text data; in response to the unifying probability of the extraction event names corresponding to the two event text data being greater than a unifying threshold, merging the extraction event names corresponding to the two event text data to obtain an event cluster; and obtaining, based on all event clusters, the new event name in the event library.

In these alternative implementations, the Euclidean distance formula may be used to calculate the similarity between the extraction event names corresponding to any two of the plurality of event text data. Different values may be set for the similarity threshold according to different event text data. For example, the similarity threshold is set as 95%.

An example is as follows: a, b, c are three different event text data, and unifying probabilities between extraction event names corresponding to every two event text data are sorted in a descending order, and for example, the result of the sorting is ac, bd, ab. First, if a and c may be merged together, a and c form an event cluster ac, and if b and d may be merged together, b and d form an event cluster bd; and then, when a and b are processed, a and b have been already assigned to different clusters, respectively. If it is determined that the two event text data a and b may be merged together and the two event text data a and b have previously been assigned to different clusters ac and bd, then whether all data in the two clusters ac and bd to which a and b belong may be merged together is judged. If yes, the two clusters ac and bd are merged; and if not, it is determined that a and b may not be merged together.

In these alternative implementations, the new event name in the event library obtained based on all event clusters may be one of the extraction event names corresponding to all event text data in the event clusters, or an event name corresponding to earliest event text data is selected as the event name of the complete event cluster, or an event name with the most occurrence times is selected as the event name of the complete event cluster.

It should be noted that in the event library, after the new event name in the event library is obtained, a new event ID is generated accordingly.

In these alternative implementations, when the plurality pieces of event text data to be assigned to the library do not meet the unifying condition, the similarity and unifying of the plurality pieces of event text data to be assigned to the library are determined based on the extraction event names of the plurality of event text data to be assigned to the library, thereby ensuring the integration effect of assigning the plurality piece of event text data to be assigned to the library to the event library.

Step 206: extracting an entity in the event text data to obtain an event entity.

In this embodiment, the event entity may refer to a person, a location, an organization, and/or the like. The entities in the event text data may be extracted by a LAC (Lexical Analysis of Chinese) to obtain the event entities. The LAC may integrally perform Chinese word segmentation, part of speech tagging, and proper name recognition tasks.

In this embodiment, after the event entities are obtained, the event entities may be stored to the event ID corresponding to each event entity in the event library, respectively, so that the contents in the event library may be effectively retrieved through an event entity when an event is retrieved.

Alternatively, after the event entities are obtained, the event entities may be stored to the event text ID corresponding to each event text data in the text library, respectively, so that the contents in the text library may be effectively retrieved through an event entity when an event text is retrieved.

Step 207: receiving a text retrieval request.

In this embodiment, the text retrieval request is a request for retrieving data in the text library, and the text retrieval request may include contents such as a retrieval keyword and a retrieval range. Through the retrieval keyword, a content identical to or related to the retrieval keyword in the text library may be queried; and through the retrieval range, a retrieval area may be determined for a retrieved content.

Step 208: performing, based on the event entity and the text retrieval request, a retrieval on the events in the text library to obtain a retrieval result.

In this embodiment, the performing, based on the event entity and the text retrieval request, the retrieval on the events in the text library to obtain the retrieval result may include:

sorting the events in the text library based on the event entity and the text retrieval request, and displaying the sorted events; and/or filtering the events in the text library based on the event entity and the text retrieval request, and displaying the filtered events.

In this embodiment, the retrieval request may include a retrieval keyword and a retrieval range. Through the retrieval keyword, a word identical to or related to the keyword may be selected in the event entity and a retrieval is performed within the retrieval range. For example, the event entity includes: XXX person, the keyword is: "a person in a time range", and the retrieval range is: from May 2020 to July 2020, then the retrieval result is: an event related to "XXX person" between May 2020 and July 2020. For another example, the event entity includes: shoes, the keyword is: "shoes", and the retrieval range defaults to the entire text library, and then events related to "shoes" in the entire text library are displayed.

Alternatively, the method provided by this embodiment may further include: receiving an event retrieval request, and retrieving, based on the event entity and the event retrieval request, an event in the event library to obtain a retrieval result of the event.

According to the method for constructing an event library provided by this embodiment, the entity in the event text data is extracted to obtain the event entity, and when the retrieval request is received, the event in the text library is retrieved based on the event entity and the retrieval request, thereby improving reliability and efficiency of the retrieval.

In this embodiment, different weight values may be set for different fields in the event information in the text library, and matching scores between the events in the text library and the extraction event name of the event text data to be assigned to a library may be obtained through the weight values of the fields. The performing the match between the extraction event name of the event text data to be assigned to a library and the event information in the preset text library to obtain the recalled event in the text library includes: performing matches between the extraction event name and event fields of events in the text library; in response to the extraction event name matching at least one event field in the text library, determining a matching score of an event matching the extraction event name based on a weight value of a field of the matching event; sorting, based on the matching score, the events in a descending order to obtain an event sequence; acquiring a semantic vector of the extraction event name and semantic vectors of the events in the event sequence, respectively; and selecting, in the event sequence, an event whose semantic vector similarity with the extraction event name is greater than a similarity threshold as the recalled event.

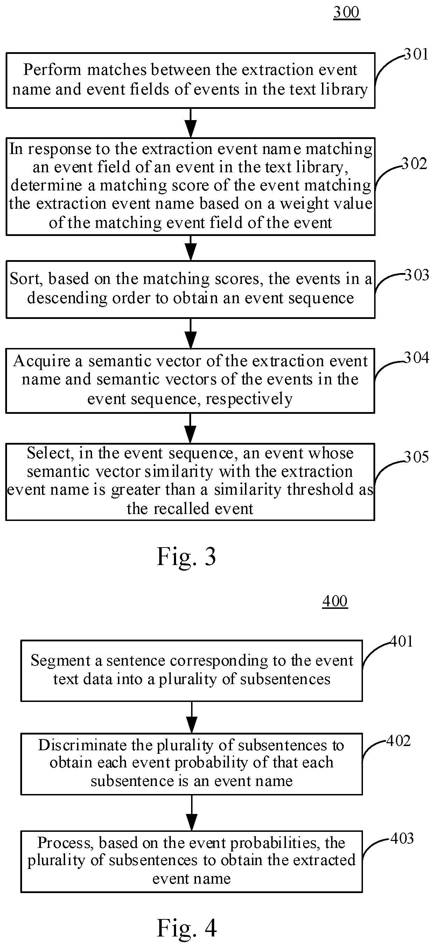

Fig. 3 shows a flow 300 of a method for obtaining a recalled event according to an embodiment of the present disclosure. The method for obtaining a recall event includes the following steps:
Step 301: performing matches between the extraction event name and event fields of events in the text library.

In this embodiment, the text library includes a plurality pieces of event text data, each piece of event text data corresponds to an event, and each piece of event text data further includes a plurality of event fields. Weight values are preset for the event fields of the events in the text library. Different dividing methods are used to obtain the event fields, based on different forms of the event text data, and the event fields may be part of the event text data. For example, the event text data includes a title, an abstract, and the like, then the title is an event field of the events in the text library, and the abstract is an event field of the events. Alternatively, the extraction event name corresponding to the event text data, or the event name corresponding to the event ID of the event text data, may be used as an event field. In an example, the weights of the extraction event name of the event text data and the event name corresponding to the event ID are set to be 2, and the weight of the title of the event text data is set to be 1.

In this embodiment, performing the matches between the extraction event name of the event text data to be assigned to the library and the event fields of the events in the text library refers to: comparing the extraction event name of the event text data to be assigned to the library with the event fields; if the extraction event name is identical to an event field, determining that the two match with each other; otherwise, determining that no match is found.

Step 302: in response to the extraction event name matching at least one event field in the text library, determining a matching score of an event matching the extraction event name based on a weight value of an event field of the matching event.

In this embodiment, the weights of the event fields are different, and may be manually configured or automatically set. Different weights are used to distinguish the importance of event fields. For example, if the event name of a piece of news to be assigned to the library matches the extraction event name of an event news text A in the text library, and also matches the title of an event news text B in the text library at the same time, and the set weight of the field of the extraction event name is greater than the weight of the field of the title (which indicates that the extraction event name is more important than the title). Then, the matching score of the event news text A is higher than the score of the event news text B.

Step 303: sorting the events in a descending order of the matching scores of the events, to obtain an event sequence.

In this embodiment, an event in the text library has a matching score indicating the matching degree between an event and the event text data to be assigned to the library. That is, one event corresponds to one matching score, the matching score may be obtained by summing the weight values corresponding to the event fields of the event, and matching scores determine positions of the events in the event sequence, and also represent the importance of the events.

Step 304: acquiring a semantic vector of the extraction event name and semantic vectors of the events in the event sequence, respectively.

In this embodiment, the semantic vector of the extraction event name and the semantic vectors of the event fields of the events in the event sequence may be obtained through a semantic model. Alternatively, the semantic vectors of the event fields of an event are obtained, and the semantic vectors of the event fields of the event are summed and then averaged to obtain the semantic vectors of the event.

Step 305: selecting an event whose semantic vector similarity with the extraction event name is greater than a similarity threshold in the event sequence as the recalled event.

In this embodiment, the semantic vector of the extraction event name to be assigned to the library and the semantic vectors of the events corresponding to recalled events are acquired, and a cosine distance between the semantic vector of the extraction event name to be assigned to the library and a semantic vector of a recalled event is acquired as a similarity between the semantic vectors of the extraction event name and the recalled event. If the similarity between the semantic vectors is lower than the similarity threshold, it indicates that the similarity between the semantic vectors is very low and the recalled event may be filtered out. Otherwise, it indicates that the similarity between the semantic vectors is high and the recalled event is retained. The purpose of filtering according to the semantic similarity is to reduce the computational pressure of the unifying determination, and the recall processes of the plurality of recalled events may be performed in parallel.

According to the method for obtaining a recalled event provided by this embodiment, each event in the text library is divided into the plurality of event fields with different weight values, and an event sequence is determined by performing the matches between the extraction event name and the event fields. During the recall, the recalled events are comprehensively considered according to the extraction event name, the weight values of the event fields of each event in the text library, and the semantic vectors of the events, thereby improving the accuracy and precision of the obtained recall event.

Fig. 4 shows a flow 400 of a method for obtaining an extraction event name according to an embodiment of the present disclosure. The method for obtaining an extraction event name includes the following steps:
Step 401: segmenting a sentence corresponding to the event text data into a plurality of subsentences.

In this embodiment, the sentence corresponding to the event text data may be a title, an abstract, or the like in the event text data. The sentence corresponding to the event text data may be segmented into the plurality of subsentences according to punctuation marks in the sentence corresponding to the event text data.

Step 402: discriminating the plurality of subsentences to obtain each event probability of that each subsentence belonging to an event name.

In this embodiment, after the sentence corresponding to the event text data is segmented into a plurality of subsentences, the probability of whether each subsentence is an event name is obtained, and the probability of whether each subsentence is an event name is the event probability described above. Each subsentence may be input into a trained event name model, to acquire the event probability of whether each subsentence is an event name.

The event name model may employ a deep learning classification model. The training process of the event name model is as follows: a label of whether each subsentence is an event name, such as <subsentence, label>, is acquired as a training sample of the event name model. A subsentence of the event text data is input to the event name model to obtain the event probability of that the subsentence belongs to an event name.

Step 403: processing the plurality of subsentences based on the each event probability, to obtain the extraction event name.

In this embodiment, a subsentence closest to the event name may be used as the extraction event name based on the values of the event probabilities.

In some alternative implementations of this embodiment, the processing the plurality of subsentences based on the each event probability, to obtain the extraction event name, includes: in response to there are a plurality of subsentences with event probabilities greater than an event name threshold, splicing the subsentences with the event probabilities greater than the event name threshold to obtain the extraction event name.

In these alternative implementations, the event name threshold is a configurable value, and the event name threshold may be set based on the configuration requirements.

In these alternative implementations, an event probability is a confidence of a subsentence belonging to a subject name, and splicing all the subsentences whose confidence is greater than the event name threshold together may avoid separating a plurality of subsentences belonging to a given event, thereby ensuring the integrity of the event.

In some alternative implementations of this embodiment, the processing, based on the event probabilities, the plurality of subsentences to obtain the extraction event name, includes: in response to there being no subsentence with an event probability greater than an event name threshold in the plurality of subsentences, acquiring a title in the event text data, and using the title as the extraction event name.

In these alternative implementations, one title generally contains only one event. When the confidence of all subsentences of the event text data belonging to the same event name is not high, the one event may represent the event name, thereby providing the reliability of extracting the extraction event name.

Alternatively, subsentences whose event probabilities are greater than the event name threshold are spliced through spaces to obtain a sentence used as the event name of the event news. If there is no subsentence whose event probability is greater than the event name threshold, a subsentence whose event probability is the greatest may be used as the event name.

According to the method for obtaining an extraction event name provided by these alternative implementations, the subsentences with the event probabilities are processed, so that the combination of the subsentences most likely being an event name is realized, and the accuracy of the obtained extraction event name is improved.

In some alternative implementations of this embodiment, the event text data is text data of event news; the text library is used to store event news; and the event library is used to store event names of events, and relevant information of events involved in the event news.

In these alternative implementations, the text data of the event data refers to a news report with an independent news event as a core. The temporal variation of the event is sudden or progressive, occurs at a certain time and at a certain place, and involves the occurrence of a particular story of one or more participants. Non-event news text data refers to a news reports that is different from the text data of the event news, i.e., the non-event news text data is a general and staged reflection of a situation, experience or problem that occurs over a period of time or a number of spaces, the tendency of which is often gradual. For example, "XXX will issue new shares worth HK $81.75 billion" is text data of event news. The text data of the event news has a greater impact on public opinion. Event analysis, as an analysis module in public opinion analysis, provides services such as event retrieval and thematic analysis, which are all implemented based on an event library. Therefore, the event library provides basic data support for event news analysis.

In some alternative implementations of this embodiment, the text data of the event news is obtained through following steps of: obtaining text data of a piece of news from a news information stream; extracting a title in the text data of the piece of news; inputting the title into a pre-trained event discrimination model to obtain a title probability of that the title belongs to an event; and determining, in response to determining that the title probability is greater than a preset event threshold, that the text data of the news is the text data of the event news.

In these alternative implementations, the text data of the news is derived from a real-time news information stream, which may be obtained by the execution body in real-time acquiring news from at least one data source. The news from the at least one data source may be a batch of text data of news, and each time one batch of text data of news is processed to improve computational efficiency. The text data of a piece of news is input into the pre-trained event discrimination model, and the title probability of that the title of the text data of the news belongs to an event is output. The event discrimination model may employ a deep learning classification model, and the training samples of the event discrimination model are a batch of news titles and corresponding labels of whether the news titles are an event.

In these alternative implementations, the preset event threshold is a configurable value, and the event name threshold may be set based on the configuration requirements.

In these alternative implementations, the title of the text data of a piece of news is determined by the event discrimination model to obtain the title probability of that the title belongs to the event, whereby the text data of event news may be easily and conveniently obtained.

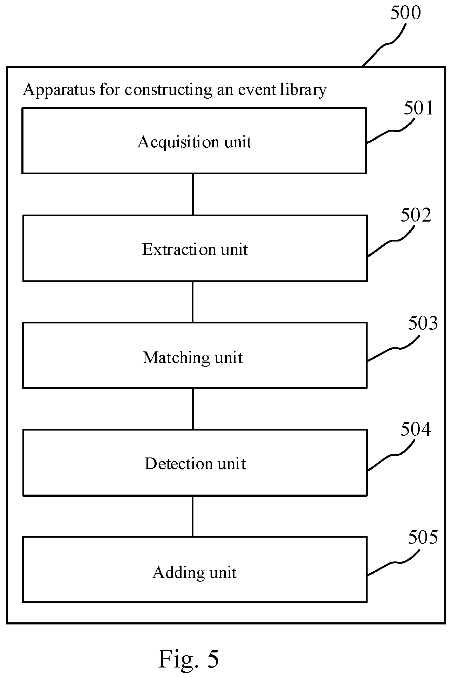

Further referring to Fig. 5, as an implementation of the method shown in each of the above figures, an embodiment of the disclosure provides an apparatus for constructing an event library. The embodiment of the apparatus corresponds to the embodiment of the method shown in Fig. 1, and the apparatus is particularly applicable to various electronic devices.

As shown in Fig. 5, the apparatus 500 for constructing an event library provided by this embodiment includes means for carrying out the method for constructing an event library. Particularly, the apparatus 500 of this embodiment includes: an acquisition unit 501, an extraction unit 502, a matching unit 503, a detection unit 504, and an adding unit 505. The acquisition unit 501 is configured to acquire at least one event text data, the at least one event text data being to be assigned to a text library, the text library being preset; the extraction unit 502 is configured to obtain an extraction event name based on the event text data; the matching unit 503 is configured to perform a match between the extraction event name and event information in the text library, to obtain a recalled event in the text library; the detection unit 504 is configured to detect, based on the recalled event, whether the extraction event name meets a unifying condition; and the adding unit 505 is configured to obtain, in response to detecting that the extraction event name does not meet the unifying condition, a new event name in the event library based on the extraction event name, and add the event text data as a new event into the text library.

In the embodiment, the specific processing of the acquisition unit 501, the extraction unit 502, the matching unit 503, the detection unit 504, and the adding unit 505 of the apparatus 500 for constructing an event library and the technical effects thereof may be described with reference to the relevant description of steps 101 to 105 in the embodiment corresponding to Fig. 1, and are not described in detail herein.

In some alternative implementations of this embodiment, the apparatus 500 for constructing an event library further includes: a unifying unit (not shown). The unifying unit is configured to assign, in response to detecting that the extraction event name meets the unifying condition, the extraction event name to an event name in the event library, the event name in event library being corresponding to the recalled event, and assign the event text data to the recalled event in the text library.

In some alternative implementations of this embodiment, when there is a plurality pieces of acquired event text data, each piece of event text data corresponds to one extraction event name, and the adding unit 505 includes: a calculation module (not shown), a unifying module (not shown), a merging module (not shown), and an obtaining module (not shown). The calculation module is configured to calculate a similarity between extraction event names corresponding to any two of the plurality pieces of event text data; the unifying module is configured to calculate, for two pieces of event text data whose similarity is greater than a similarity threshold, a unifying probability of extraction event names corresponding to the two event text data; the merging module is configured to merge, in response to the unifying probability of the extraction event names corresponding to the two event text data being greater than a unifying threshold, the extraction event names corresponding to the two event text data to obtain an event cluster; and the obtaining module is configured to obtain, based on all event clusters, the new event name in the event library.

In some alternative implementations of this embodiment, the event information includes: a plurality of fields with different weight values; and the matching unit 503 includes: a matching module (not shown), a determination module (not shown), a sorting module (not shown), an acquisition module (not shown), and a selection module (not shown). The matching module is configured to perform matches between the extraction event name and event fields of events in the text library; the determination module is configured to determine, in response to the extraction event name matching an event field of an event in the text library, a matching score of the event matching the extraction event name based on a weight value of the matching event field of the event; the sorting module is configured to sort, based on the matching scores, the events in a descending order to obtain an event sequence; the acquisition module is configured to acquire a semantic vector of the extraction event name and semantic vectors of the events in the event sequence, respectively; and the selection module is configured to select, in the event sequence, an event whose semantic vector similarity with the extraction event name is greater than a similarity threshold as the recalled event.

In some alternative implementations of this embodiment, the apparatus 500 for constructing an event library further includes: a filtering unit (not shown), a receiving unit (not shown), and a retrieval unit (not shown). The filtering unit is configured to extract an entity in the event text data to obtain an event entity; the receiving unit is configured to receive a text retrieval request; and the retrieval unit is configured to perform, based on the event entity and the text retrieval request, a retrieval on the events in the text library to obtain a retrieval result.

In some alternative implementations of this embodiment, the extraction unit 502 includes: a dividing module (not shown), a discrimination module (not shown), and a processing module (not shown). The dividing module is configured to segment a sentence corresponding to the event text data into a plurality of subsentences; the discrimination module is configured to discriminate the plurality of subsentences to obtain each event probability of that each subsentence is an event name; and the processing module is configured to process the plurality of subsentences based on the each event probability, to obtain the extraction event name.

In some alternative implementations of this embodiment, the processing module includes a splicing submodule (not shown). The splicing sub module is configured to splice, in response to there being subsentences with event probabilities greater than an event name threshold in the plurality of subsentences, the subsentences with the event probabilities greater than the event name threshold to obtain the extraction event name.

In some alternative implementations of this embodiment, the processing module includes an acquisition sub module (not shown). The acquisition sub module is configured to acquire, in response to there is no subsentence with an event probability greater than an event name threshold in the plurality of subsentences, a title in the event text data, and use the title as the extraction event name.

In some alternative implementations of this embodiment, the event library stores the event name of the recall event and an extraction event name of the recall event; and the detection unit 504 includes: a naming module (not shown), a recall module (not shown), an extraction module (not shown), and a meeting module (not shown). The naming module is configured to acquire the event name of the recalled event from the event library; the recall module is configured to input the event name of the recalled event and the extraction event name obtained based on the event text data to be assigned to the text library into a unifying discrimination model, to obtain a recall probability of that the extraction event name belongs to the event name of the recalled event; the extraction module is configured to input, in response to the recall probability being greater than a recall threshold, extraction event name of the recalled event and the extraction event name obtained based on the event text data to be assigned to the text library into the unifying discrimination model, to obtain a unifying probability of that the extraction event name belongs to the event name of the recalled event; and the meeting module is configured to determine, in response to the unifying probability being greater than the recall threshold, that the extraction event name meets the unifying condition.

In some alternative implementations of this embodiment, the event text data is text data of event news; the text library is used to store event news; and the event library is used to store event names of events, and relevant information of the events involved in the event news.

In some alternative implementations of this embodiment, the text data of the event news is obtained through following units of: an information unit (not shown), an extracting unit (not shown), a discrimination unit (not shown), and a determination unit (not shown). The information unit is configured to obtain text data of a piece of news from a news information stream; the extracting unit is configured to extract a title in the text data of the piece of news; the discrimination unit is configured to input the title into a pre-trained event discrimination model to obtain a title probability of that the title is an event; and the determination unit is configured to determine, in response to determining that the title probability is greater than a preset event threshold, that the text data of the piece of news is the text data of the event news.

According to the apparatus for constructing an event library provided by the embodiments of the present disclosures, first, the acquisition unit 501 acquires at least one event text data to be assigned to the library; secondly, the extraction unit 502 obtains, based on the event text data, the extraction event name; then, the matching unit 503 performs a match between the extraction event name and the event information in the preset text library, to obtain the recalled event in the text library; thereafter, the detection unit 504 detects, based on the recalled event, whether the extraction event name meets the unifying condition; and finally, the adding unit 505 obtains, in response to detecting that the extraction event name does not meet the unifying condition, a new event name in the event library based on the extraction event name, and add the event text data as a new event into the text library. Therefore, when an event name in the event library is constructed, the recalled event is obtained from the text library and the unifying determination is performed, and the corresponding relationship between the extraction event name and the information in the text library is comprehensively considered, so that the comprehensiveness and accuracy of the construction of the event library are improved.

According to embodiments of the disclosure, an electronic device, a readable storage medium and a computer program product are further provided.

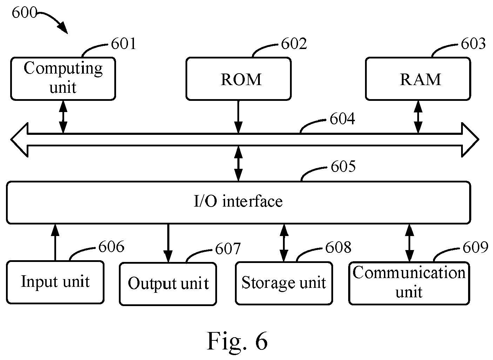

Fig. 6 shows a schematic block diagram of an electronic device 600 adapted to implement embodiments of the disclosure. The electronic device is intended to represent various forms of digital computers, such as laptops, desktops, worktables, personal digital assistants, servers, blade servers, mainframe computers and other suitable computers. The electronic device may alternatively represent various forms of mobile devices, such as personal digital processing, cellular phones, smart phones, wearable devices and other similar computing devices. The components, their connections and relationships, and their functions shown herein are examples only, and are not intended to limit the implementations of the disclosure as described and/or claimed herein.

As shown in Fig. 6, the device 600 may include a computing unit 601, which may execute various appropriate actions and processes in accordance with a computer program stored in a read-only memory (ROM) 602 or a computer program loaded into a random-access memory (RAM) 603 from a storage unit 608. The RAM 603 may alternatively store various programs and data required by operations of the device 600. The computing unit 601, the ROM 602 and the RAM 603 are connected to each other through a bus 604. An input/output (I/O) interface 605 is also connected to the bus 604.

Multiple components of the device 600 are connected to the I/O interface 605, and include: an input unit 606, such as a keyboard and a mouse; an output unit 607, such as various types of displays and a speaker; a storage unit 608, such as a magnetic disk and an optical disk; and a communication unit 609, such as a network card, a modem and a wireless communication transceiver. The communication unit 609 allows the device 600 to exchange information or data with other devices through a computer network, such as the Internet and/or various telecommunications networks.

The computing unit 601 may be various general-purpose and/or specific-purpose processing components having processing and computing capabilities. Some examples of the computing unit 601 include, but are not limited to, a central processing unit (CPU), a graphics processing unit (GPU), various specific artificial intelligence (AI) computing chips, various computing units running machine learning model algorithms, a digital signal processor (DSP), and any appropriate processor, controller, microcontroller and the like. The computing unit 601 performs various methods and processing described above, such as the method for constructing an event library. For example, in some embodiments, the method for constructing an event library may be implemented as a computer software program, which is tangibly included in a machine-readable medium, such as the storage unit 608. In some embodiments, part or all of the computer program may be loaded and/or installed on the device 600 through the ROM 602 and/or the communication unit 609. When the computer program is loaded into the RAM 603 and executed by the computing unit 601, one or more steps of the method for constructing an event library described above may be performed. Alternatively, in other embodiments, the computing unit 601 may be configured to perform the method for constructing an event library in any other appropriate manner (such as through firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input device and at least one output device, and send the data and instructions to the storage system, the at least one input device and the at least one output device.

Program codes used to implement the method of the disclosure may be written in any combination of one or more programming languages. These program codes may be provided to a processor or controller of a general-purpose computer, specific-purpose computer or other programmable apparatus for constructing an event library, so that the program codes, when executed by the processor or controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more specific example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other.

In the technical solutions of the present disclosure, the acquisition, storage and application of the user personal information are all in accordance with the provisions of the relevant laws and regulations, and the public order and good customs are not violated.

It should be appreciated that the steps of reordering, adding or deleting may be executed using the various forms shown above. For example, the steps described in the disclosure may be executed in parallel or sequentially or in a different order, so long as the expected results of the technical solutions provided by the disclosure may be realized, and no limitation is imposed herein.

The above specific implementations are not intended to limit the scope of the disclosure. It should be appreciated by those skilled in the art that various modifications, combinations, sub-combinations, and substitutions may be made depending on design requirements and other factors. Any modification, equivalent and modification that fall within the spirit and principles of the disclosure are intended to be included within the scope of the disclosure.

## Claims

1. A method for constructing an event library, the method comprising:
acquiring (101, 201) at least one event text data, the at least one event text data being to be assigned to a text library, the text library being preset;
obtaining (102, 202) an extraction event name based on the event text data;
performing (103, 203) a match between the extraction event name and event information in the text library, to obtain a recalled event in the text library;
detecting (104, 204), based on the recalled event, whether the extraction event name meets a unifying condition; and
in response to detecting that the extraction event name does not meet the unifying condition, obtaining (105, 205) a new event name in the event library based on the extraction event name, and adding the event text data as a new event into the text library.

2. The method according to claim 1, the method further comprising:
in response to detecting that the extraction event name meets the unifying condition, assigning the extraction event name to an event name in the event library, the event name in event library being corresponding to the recalled event, and assigning the event text data to the recalled event in the text library.

3. The method according to claim 1, wherein there is a plurality pieces of acquired event text data, each piece of event text data corresponds to one extraction event name, and the obtaining the new event name in the event library based on the extraction event name, comprises:
calculating a similarity between extraction event names corresponding to any two of the plurality pieces of event text data;
calculating, for two pieces of event text data whose similarity is greater than a similarity threshold, a unifying probability of extraction event names corresponding to the two event text data;
in response to the unifying probability of the extraction event names corresponding to the two event text data being greater than a unifying threshold, merging the extraction event names corresponding to the two event text data to obtain an event cluster; and
obtaining, based on all event clusters, the new event name in the event library.

4. The method according to claim 1, wherein the event information comprises: a plurality of event fields with different weight values; and the performing (103, 203) the match between the extraction event name and the event information in the text library to obtain the recalled event in the text library, comprises:
performing (301) matches between the extraction event name and event fields of events in the text library;
in response to the extraction event name matching an event field of an event in the text library, determining (302) a matching score of the event matching the extraction event name based on a weight value of the matching event field of the event;
sorting (303), based on the matching scores, the events in a descending order to obtain an event sequence;
acquiring (304) a semantic vector of the extraction event name and semantic vectors of the events in the event sequence, respectively; and
selecting (305), in the event sequence, an event whose semantic vector similarity with the extraction event name is greater than a similarity threshold as the recalled event.

5. The method according to any one of claims 1 to 4, the method further comprising:
extracting (206) an entity in the event text data to obtain an event entity;
receiving (207) a text retrieval request; and
performing (208), based on the event entity and the text retrieval request, a retrieval on the events in the text library to obtain a retrieval result.

6. The method according to claim 5, wherein obtaining (102) the extraction event name based on the event text data, comprises:
segmenting (401) a sentence corresponding to the event text data into a plurality of subsentences;
discriminating (402) the plurality of subsentences to obtain each event probability of that each subsentence is an event name; and
processing (403) the plurality of subsentences based on the each event probability, to obtain the extraction event name.

7. The method according to claim 6, wherein the processing the plurality of subsentences based on the each event probability, to obtain the extraction event name, comprises:
in response to there being subsentences with event probabilities greater than an event name threshold in the plurality of subsentences, splicing the subsentences with the event probabilities greater than the event name threshold to obtain the extraction event name.

8. The method according to claim 6, wherein processing the plurality of subsentences based on the each event probability, to obtain the extraction event name, comprises:
in response to there is no subsentence with an event probability greater than an event name threshold in the plurality of subsentences, acquiring a title in the event text data, and using the title as the extraction event name.

9. The method according to claim 6, wherein the event library stores the event name of the recalled event and an extraction event name of the recalled event; and
the detecting, based on the recalled event, whether the obtained extraction event name meets the unifying condition, comprises:
acquiring the event name of the recalled event from the event library;
inputting the event name of the recalled event and the extraction event name obtained based on the event text data to be assigned to the text library into a unifying discrimination model, to obtain a recall probability of that the extraction event name belongs to the event name of the recalled event;
in response to the recall probability being greater than a recall threshold, inputting extraction event name of the recalled event and the extraction event name obtained based on the event text data to be assigned to the text library into the unifying discrimination model to obtain a unifying probability of that the extraction event name belongs to the event name of the recalled event; and
in response to the unifying probability being greater than the recall threshold, determining that the extraction event name meets the unifying condition.

10. The method according to claim 1, wherein the event text data is text data of event news;
the text library is used to store event news; and the event library is used to store event names of events, and relevant information of the events involved in the event news.

11. The method according to claim 10, wherein the text data of the event news is obtained through:
obtaining text data of a piece of news from a news information stream;
extracting a title in the text data of the piece of news;
inputting the title into a pre-trained event discrimination model to obtain a title probability of that the title is an event; and
in response to determining that the title probability is greater than a preset event threshold, determining that the text data of the piece of news is the text data of the event news.

12. An apparatus for constructing an event library, the apparatus comprising means for carrying out the method according to any one of claims 1-11.

13. A non-transitory computer readable storage medium storing computer instructions, wherein the computer instructions are used to cause a computer to execute the method according to any one of claims 1 to 11.

14. A computer program product comprising a computer program, wherein the computer program, when executed by a processor, implements the method according to any one of claims 1 to 11.
